Europäisches Patentamt

European Patent Office

Office européen des brevets

(11) Veröffentlichungsnummer: **0 208 900**
**B1**

(12) # EUROPÄISCHE PATENTSCHRIFT

(45) Veröffentlichungstag der Patentschrift:
**19.12.90**

(51) Int. Cl.⁵: **F24H 6/00, F24H 1/16**

(21) Anmeldenummer: **86107697.4**

(22) Anmeldetag: **05.06.86**

(54) **Elektrischer Durchlauferhitzer.**

(30) Priorität: **09.07.85 DE 8519840 U**

(43) Veröffentlichungstag der Anmeldung:
**21.01.87 Patentblatt 87/4**

(45) Bekanntmachung des Hinweises auf die Patenterteilung:
**19.12.90 Patentblatt 90/51**

(84) Benannte Vertragsstaaten:
**AT CH DE FR GB IT LI**

(56) Entgegenhaltungen:
**DE-A- 1 454 728**
**DE-B- 1 265 892**
**US-A- 4 326 552**

**PATENT ABSTRACTS OF JAPAN, Band 9,**
**Nr. 63 (M-365)[1786], 20. März 1985; &**
**JP-A-59 197 753 (HITACHI SEISAKUSHO**
**K.K.) 09-11-1984**

(73) Patentinhaber: **ELPAG AG CHUR, Quaderstrasse 11,**
**CH-7001 Chur(CH)**

(72) Erfinder: **Bleckmann, Ingo, Dipl.-Ing. Dr. mont.,**
**Ignaz-Rieder-Kai 11, A-5020 Salzburg(AT)**

(74) Vertreter: **Liedl, Gerhard, Steinsdorfstrasse 21 - 22,**
**D-8000 München 22(DE)**

## Beschreibung

Der Erfindung betrifft einen elektrischen Durchlauferhitzer entsprechend den Merkmalen des Oberbegriffes des Hauptanspruches.

Aus DE-A 1 454 728 ist ein elektrisch beheizter Durchlauferhitzer bekannt, bei dem zwei in Reihe geschaltete Heizsäulen je aus einem Zentralrohr bestehen, auf welches ein mit Sicken versehenes Mantelrohr aufgeschoben und durch Löten fest verbunden ist. In die Außenwindungen der Sicken sind spiralförmige Rohrheizkörper eingelegt. An der Stirnseite besitzt das Zentralrohr zinnenförmige Durchtrittsöffnungen, die in den Zwischenraum zwischen dem Mantelrohr und dem Zentralrohr münden, so daß dementsprechend ein das Zentralrohr durchfließendes Medium über diese Zwischenräume zu den Zwischenräumen der nächsten Heizsäule und von dort wieder zurück in das Zentralrohr der nächsten Heizsäule fließen kann. Die Anordnung wird nur mit einem einzigen Durchflußmedium betrieben. Eine Umstellung auf zwei verschiedene Medien würde schon deshalb auf Schwierigkeiten stoßen, da die im Querschnitt unregelmäßig geformten Zwischenräume zwischen dem mit Sicken versehenen Mantelrohr und dem Zentralrohr keinen einfachen Anschluß ermöglichen.

Aus der Veröffentlichung PATENT ABSTRACT OF JAPAN, Band 9, Nr. 63, 20. März 1985 ist bekannt zwei verschiedene Medien, nämlich heißes Wasser und Luft zur Raumerwärmung durch im Querschnitt tränenförmige Rohre zu leiten, welche mit ihren geraden Mantelbereichen aneinandergelegt sind.

Aus der DE-A-33 07 962 ist ein elektrischer Durchlauferhitzer für Getränkebereiter bekannt geworden, bei dem ein Hauptrohr vorgesehen ist, dessen lichter Durchgang zur Führung der aufzuheizenden Flüssigkeit dient. Der Mantel des Hauptrohres weist eine schraubengangförmig verlaufende Nut auf, in die ein Rohrheizkörper eingebettet ist.

Aus der DE-A-24 40 426 ist ein elektrischer Durchlauferhitzer bekannt geworden, bei dem das Durchflußrohr den Rohr heizkörper konzentrisch umgibt.

Aus der US-A-31 30 737 ist eine Geschirrspülmaschine bekannt geworden, bei der ein elektrischer Heizwiderstand in dem Luftstrom angeordnet ist.

Aus dem DE-U-79 01 761 ist ein Durchlauferhitzer für Geschirrspülmaschinen bekannt geworden, bei dem auf einem Innenrohr ein Heizkörper in Wendelform angeordnet ist. Die Anordnung wird von einem Außenrohr umschlossen, so daß der Ringspalt zwischen dem Innenrohr und dem Außenrohr, in welchem der Heizkörper liegt, für ein zweites Medium zur Verfügung steht.

Bei Geräten, bei denen zwei unterschiedliche Medienströme gleichzeitig oder gegebenenfalls nacheinander erhitzt werden sollen, z. B. bei Geschirrspülmaschinen, ergeben sich in erster Linie Schwierigkeiten hinsichtlich der Anpassung der Heizleistung an den entsprechenden Medienstrom. So wird im allgemeinen beim Durchfluß von Wasser die Heizeinrichtung bedeutend stärker abgekühlt als beim Durchfluß eines Luftstromes. Dementsprechend muß die Heizleistung der Oberflächenabgabecharakteristik angepaßt werden.

Wird die Heizeinrichtung unmittelbar in den Wasserstrom eingebracht, so verkalkt diese mit entsprechender Belastung der Heizeinrichtung - im allgemeinen eines Rohrheizkörpers - und Verschlechterung der Wärmeabgabe. Bei Verwendung von verschmutztem Wasser, wie dem Spülwasser einer Geschirrspülmaschine, setzen sich außerdem Schmutzteilchen, insbesondere Speisereste, an dem Rohrheizkörper ab, welche außer der Verschlechterung der Wärmeabgabe zu entsprechender Geruchsbildung führen können und hygienisch bedenklich sind.

Es wurde dementsprechend, wie aus den oben angegebenen Druckschriften zu entnehmen, vorgeschlagen, einen Rohrheizkörper spiralig auf einem Hauptrohr aufzuwickeln, so daß die aufzuheizende Flüssigkeit nicht in unmittelbaren Kontakt mit dem Rohrheizkörper, sondern nur mit dem Innenmantel des Hauptrohres kommt. Wird jedoch bei einer derartigen Anordnung anschließend nach der Flüssigkeitserwärmung Luft durch das Hauptrohr durchgeblasen, dann wird ein Großteil der Heizleistung des Rohrheizkörpers nach außen abgestrahlt Die Wärmeübertragung auf den Luftstrom ist unzureichend. Weiterhin entfällt natürlich bei diesen Anordnungen die Möglichkeit zwei Medienströme gleichzeitig und unabhängig voneinander zu erwärmen.

Der Erfindung liegt daher die Aufgabe zugrunde, einen Durchlauferhitzer der in Rede stehenden Art so auszubilden, daß zwei Medienströme, nämlich Wasser und Luft, unabhängig voneinander und ohne unmittelbare Berührung mit dem Rohrheizkörpermantel erhitzt werden können, wobei eine optimale Wärmeübertragung auf jeden der Medienströme gewährleistet sind.

Die Lösung der genannten Aufgabe ergibt sich aus den kennzeichnenden Merkmalen des Hauptanspruchs. Die Unteransprüche beschreiben bevorzugte Ausführungsformen.

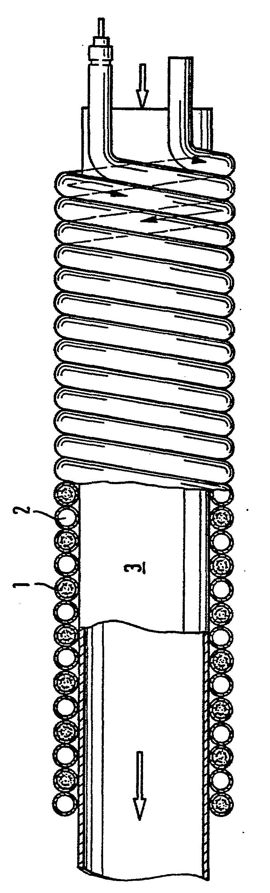

Die beiliegende Zeichnung dient der weiteren Erläuterung der Neuerung. Die Figur zeigt eine teilweise geschnittene Ansicht des Durchlauferhitzers.

Eine Doppelspirale aus einem Rohrheizkörper 1 und einem Durchlaufrohr 2 ist auf ein Hauptrohr 3 aufgewickelt bzw. aufgeschoben. Der Mantel des Rohrheizkörpers 1 und der Mantel des Durchlaufrohres 2 können punktweise oder kontinuierlich miteinander verlötet sein. Weiterhin kann die Anordnung auch mit dem Hauptrohr 3 verlötet sein.

Der Durchlauferhitzer ist für die verschiedensten Anwendungsgebiete geeignet. Bei der Anwendung für Geschirrspülmaschinen wird durch das Hauptrohr 3 die Spülflüssigkeit geleitet, während durch das Durchlaufrohr 2 ein Luftstrom geblasen werden kann.

Da die Wärmeübertragung auf das Durchflußrohr 2 vom Rohrheizkörper 1 einerseits durch direkte Anlage und andererseits durch die längere Wegstrecke sehr intensiv ist, wird gewährleistet, daß bei einer bestimmten Heizleistung des Rohrheizkörpers die durchströmende Luft entsprechend erhitzt wird. Andererseits wird verhindert, daß der Rohrheizkörper eine unzulässig hohe Temperatur annimmt. Unabhängig davon, ob die beiden das Hauptrohr 3 bzw. das Durchflußrohr 2 durchströmenden Medien gleichzeitig oder nacheinander erhitzt werden sollen, ist in jedem Fall gewährleistet, daß eine optimale Wärmeübertragung erreicht wird.

Als besonders vorteilhaft erwies sich eine Ausführungsform bei der auf ein Hauptrohr aus Chrom-Nickelstahl ein dünnes Aluminiumrohr aufgeschoben wird, welches die Doppelspirale aus dem Rohrheizkörper 1 und dem Durchflußrohr 2 trägt. Dies führt zu einer optimal günstigen Wärmeabfuhr des Rohrheizkörpers. Die Wärme wird besser verteilt, da der Chrom-Nickelstahl eine schlechte Wärmeleitfähigkeit besitzt, so daß also am Innenmantel des Hauptrohres 3 eine gleichmäßige Temperatur und nicht etwa eine dem Rohrheizkörpermuster entsprechende Temperaturverteilung erzielt wird. Dadurch wird das Anbacken von Schmutzteilchen am Innenmantel des Hauptrohres 3 vermieden.

**Patentansprüche**

1. Elektrischer Durchlauferhitzer für Wasser und ein weiteres Medium, z.B. Luft, bei dem auf einem Hauptrohr (3) ein Rohrheizkörper (1) und ein Durchflußrohr (2) spiralig aufgewickelt oder aufgeschoben sind, dadurch gekennzeichnet, daß das Hauptrohr (3) aus einem Chrom-Nickelstahl besteht und Anschlüsse für die Durchleitung von Wasser besitzt, während das spiralig auf das Hauptrohr (3) aufgewickelte Rohr (2) von dem anderen Medium wie z.B. Luft durchströmt wird.

2. Durchlauferhitzer nach Anspruch 1, dadurch gekennzeichnet, daß auf das Hauptrohr (3) ein dünnes Aluminiumrohr aufgeschoben ist, welches die Doppelspirale aus dem Rohrheizkörper (1) und dem Durchflußrohr (2) trägt.

**Claims**

1. An electrical continuous flow heater for water and a further medium, for example air, wherein a tubular heater body (1) and a continuous flow pipe (2) are wound or pushed in a spiral configuration on a main pipe (3), characterised in that the main pipe (3) comprises a chromium-nickel steel and has connections for the passage of water therethrough while the pipe (2) which is wound in a spiral configuration onto the main pipe (3) has the other medium such as for example air flowing therethrough.

2. An electrical continuous flow heater according to claim 1, characterised in that pushed onto the main pipe (3) is a thin aluminium pipe which bears the double spiral consisting of the tubular heater body (1) and the continuous flow pipe (2).

**Revendications**

1. Réchauffeur instantané électrique d'eau et d'un autre milieu, par exemple l'air, comprenant un radiateur tubulaire (1) et un tube d'écoulement (2) enroulés ou enfilés en spirales sur un tube principal (3), caractérisé en ce que le tube principal (3) est en acier chrome-nickel, et possède des branchements pour l'écoulement de l'eau tandis que le tube (2) enroulé en spirales sur le tube principal (3) est parcouru par un écoulement d'un autre milieu, comme par exemple l'air.

2. Réchauffeur instantané selon la revendication 1, caractérisé en ce que sur le tube principal (3) est enfilé un fin tube en aluminium, lequel porte les doubles spirales du radiateur tubulaire (1) et du tube d'écoulement (2).